# EUROPEAN PATENT SPECIFICATION

(11) **EP 0 754 879 B1**
(45) Date of publication and mention of the grant of the patent: **30.01.2002**
(21) Application number: 96111527.6
(22) Date of filing: 17.07.1996
(51) Int. Cl.: F16F 15/26

(54) **Internal combustion engine with balancers**
Brennkraftmaschine mit Balanciersystem
Moteur à combustion interne avec système d'équilibrage

(30) Priority: 17.07.1995 JP 20385695; 18.07.1995 JP 18169395; 31.07.1995 JP 19526495; 31.07.1995 JP 19534395
(43) Date of publication of application: 22.01.1997
(73) Proprietor: YAMAHA HATSUDOKI KABUSHIKI KAISHA, Iwata-shi Shizuoka-ken, 438 (JP)
(72) Inventor: Okui, Kaoru, c/o Yamaha Hatsudoki K.K., Iwata-shi, Shizuoka-ken (JP); Sakurai, Kenichi, c/o Yamaha Hatsudoki K.K., Iwata-shi, Shizuoka-ken (JP); Niiyama, Tatsuo, c/o Yamaha Hatsudoki K.K., Iwata-shi, Shizuoka-ken (JP); Uchida, Masahiro, c/o Yamaha Hatsudoki K.K., Iwata-shi, Shizuoka-ken (JP)
(74) Representative: Grünecker, Kinkeldey, Stockmair & Schwanhäusser Anwaltssozietät

(56) References cited:
- EP-A- 0 184 685
- EP-A- 0 260 174
- EP-A- 0 369 618
- EP-A- 0 408 335
- EP-A- 0 481 837
- DE-A- 4 134 399
- DE-A- 4 238 148
- GB-A- 1 210 245
- PATENT ABSTRACTS OF JAPAN vol. 003, no. 097 (M-069), 17 August 1979 & JP 54 071210 A (NISSAN MOTOR CO LTD), 7 June 1979,

## Description

The present invention relates to an internal combustion engine with balancers comprising a crankshaft and an intermediate shaft which are drivingly connected by drive linkage means, additional drive linkage means drivingly connecting said intermediate shaft with other engine components comprising one or two camshafts, and balance weights that respond to the inertial forces of the engine and are provided on at least one of said intermediate shaft or said drive linkage means

Such an internal combustion engine is known from GB-A-1 210 245.

Internal combustion engines of the type as mentioned above are generally known from the art. Engines comprising a reciprocating piston vibrate because of the inertial forces generated by the reciprocal movement of their pistons and connecting rods. In particular, in engines with an uneven number of cylinders it is difficult to balance the inertial forces by providing counter-weights on the cam shaft only. Thus, in the prior art, balancers are mounted on a balance shaft which is linked to the crankshaft and rotates at the same speed as the crankshaft. These balancer shafts employ balance weights that respond to the inertial forces of the engine.

The use of separate balance weights on a balancer shaft in the prior art increases the number of parts of the engine and furthermore requires the separate making of the balancer weights which normally have a rather complex shape.

In respect of the drawbacks of the prior art, the present invention intends to provide a more simple engine structure which balances the inertial forces generated by the movement of the pistons and which is easier to manufacture.

According to the present invention, this technical problem is solved by an internal combustion engine as defined in the opening paragraph, in that the intermediate shaft constitutes a first intermediate shaft (34;120), this intermediate shaft and said one or two cam shafts are linked by a second drive linkage means, said second drive linkage means forming part of the additional drive linkage means and having a second intermediate shaft that runs parallel to said first intermediate shaft, said first intermediate shaft and said second intermediate shaft each is provided with a sprocket, both sprockets being coupled by a first chain of said additional drive linkage means, and that the second intermediate shaft comprises another sprocket which is coupled to sprockets of said one or two cam shafts via a second chain.

By installing one or more balance weights on either the intermediate shaft or the drive linkage means or on both, the need of a separate balance shaft to absorb the inertial forces caused by the engine can be avoided. Thus, the overall number of parts of the engine is reduced and its making simplified. Preferably, the balance weights are formed integrally with elements provided on or fitted on the intermediate shaft or with the shaft itself. In that case, there will be no need of making separate balance weights thereby further reducing the number of parts of the engine. This invention can be broadly applied to all types of existing engines having an intermediate shaft and drive linkage means drivingly connecting the intermediate shaft with auxiliary engine equipment, such as cam shafts, a water pump, an oil pump or any other auxiliary equipment.

According to the invention, the one or two cam shafts of the engine are driven by a chain drive from the intermediate shaft. The chain drive comprises a second intermediate shaft to which rotation is transmitted from said first intermediate shaft. The rotation from the second intermediate shaft to one or two cam shafts is transmitted by a chain which when viewed from the axial direction of the cam shaft can be positioned outside the cylinder bank without overlapping the cylinders. Preferably, another chain is arranged between the first and second intermediate shafts without overlapping the cylinders similar to the aforementioned chain.

Chain drives normally employ chain drive tensioners on the slack side of the chain, but more consideration should be given to the assembling properties, chain tension adjustment and maintenance when determining their position. According to a preferred embodiment, the chain tensioners for applying the tension required to said chains are arranged on the outer side of the engine, i.e. on the side of the chain drive facing away from the cylinder bank. This arrangement offers easier chain tensioner assembly, tension adjustment and chain maintenance.

In internal combustion engines having an intermediate shaft, the configuration of the location of an oil pump and an oil main gallery that is used by the oil pump to supply oil to the cylinder block has to be taken into consideration in order to shorten the length of the various oil channels and in order to reduce the number of oil holes in the cylinder block. According to a preferred embodiment of the invention, the drive linkage means between the first intermediate shaft and an oil pump comprises a pair of helical gears in engagement with each other. Thus, the oil pump and other oil supply equipment such as the oil main gallery or an oil filter can be arranged on the same side of the cylinders close to the cylinder block. Thus, the length of the oil supply channel to the cylinder block can be reduced to minimum length and a lower number of oil holes is needed so that the machining requirements in manufacturing and flow losses of the oil can be reduced.

The use of helical gears in the drive linkage means furthermore contributes to a reduction of noise of the engine. However, by the application of helical gears a thrust force is generated acting on the intermediate shaft. Preferably, another helical gear set is provided which transmits the rotation from the crankshaft to the intermediate shaft. The helical gear sets are arranged with respect to each other in such manner that the thrust forces generated by each pair of helical gears act in opposite direction on the intermediate shaft Thus, the thrust forces acting on the intermediate shaft are minimized thereby preventing uneven wear on the shaft and its bearings. Preferably, various pieces of auxiliary engine equipment are arranged on the air intake side of the engine, thereby improving the maintenance properties of that equipment and preventing them from heat damage by the exhaust heat

According to another preferred embodiment of the invention, a drive pulley is arranged on the intermediate shaft on the same side as a crank damper is arranged on the crankshaft. The drive pulley is positioned further inward in the engine with respect to the axis of rotation of the crankshaft than the crank damper. In conventional engines, various pieces of auxiliary equipment are positioned in front of the approximate entire front side of the engine entailing the problem of requiring a large size. Since, in the prior art, the crank damper performed double duty as damper and as auxiliary equipment drive pulley, the width of said crank damper in conventional engines is larger than required, thereby increasing the overall length of the engine in the direction of its crankshaft axis. By arranging the drive pulley for the auxiliary equipment further inside the engine than the crank damper so that the auxiliary equipment drive pulley is separate from the crank damper, it is possible to reduce the width of the crank damper and thereby to reduce the overall length of the engine. As the auxiliary equipment is positioned on one side of the engine, i.e. the cylinder bank, the width of the engine can be reduced as well hence providing a small and compact engine.

The features described in connection with the preferred embodiments can be applied to any type of internal combustion engines, preferably four-stroke internal combustion engines with an uneven number of cylinders.

Further advantageous embodiments of the invention can be derived from the subclaims.

Examples of the invention will be described hereinafter with reference to the drawings which show in
Figure 1, a top sectional view on the crankshaft and intermediate shaft of a first embodiment,
Figure 2, a side sectional view in the direction of the axis of rotation of the crankshaft of the first embodiment,
Figure 3, a sectional view of the intermediate shaft along line 3-3 of figure 1,
Figure 4, a sectional view of the intermediate shaft along line 4-4 of figure 1,
Figure 5, a top sectional view of a portion of the intermediate shaft according to a second embodiment,
Figure 6, a perspective sectional view of the intermediate shaft along line 6-6 in figure 5,
Figure 7, a side sectional view of a third embodiment,
Figure 8, a sectional view of the auxiliary equipment drive system and a cam shaft drive system according to the third embodiment,
Figure 9, a side view of the chain drive of the cam shafts,
Figure 10, a top view of the cylinder block,
Figure 11, another top view showing an embodiment with helical gears on the intermediate shaft,

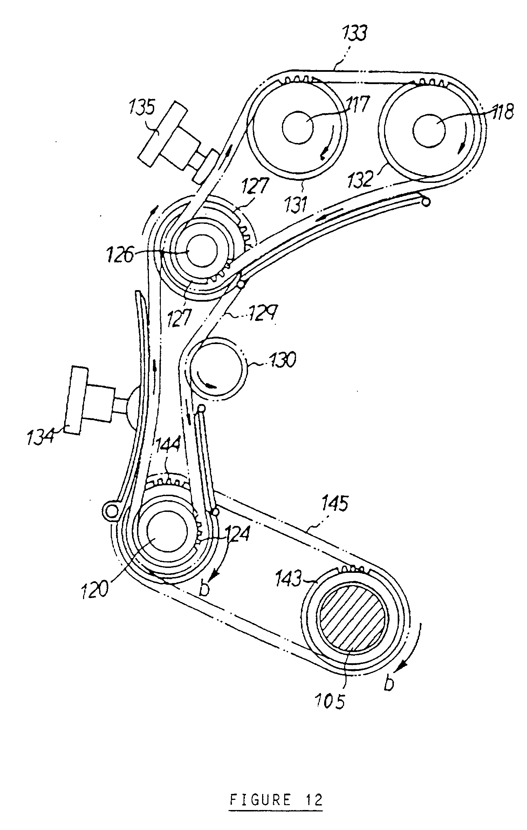

Figure 12, an alternative embodiment of the chain drive system,
Figure 13, a side view of the cylinder block in the direction of arrow A in figure 10, and
Figure 14, a side view of the cylinder block in the direction of arrow B in figure 10.

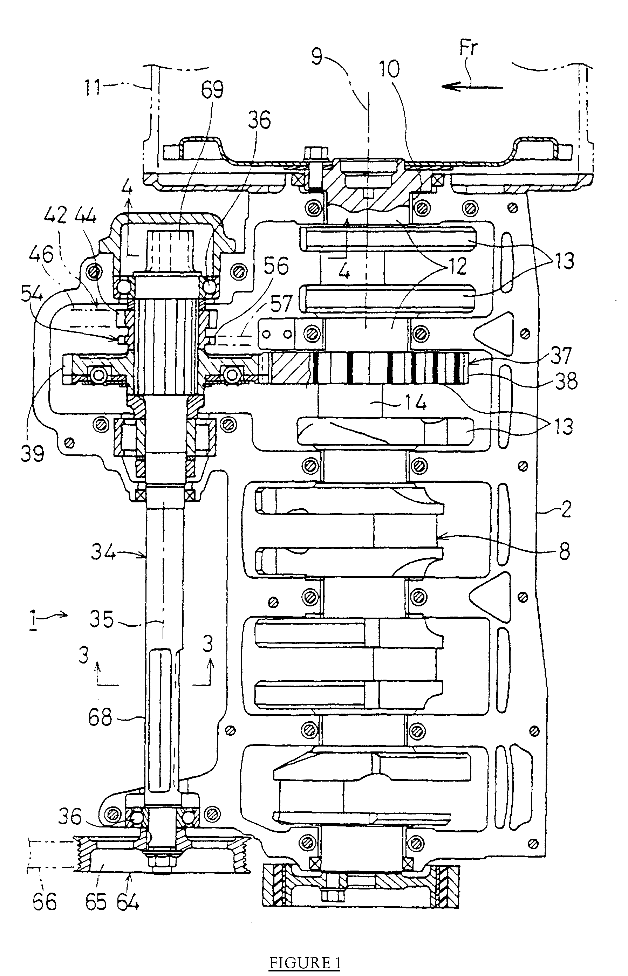

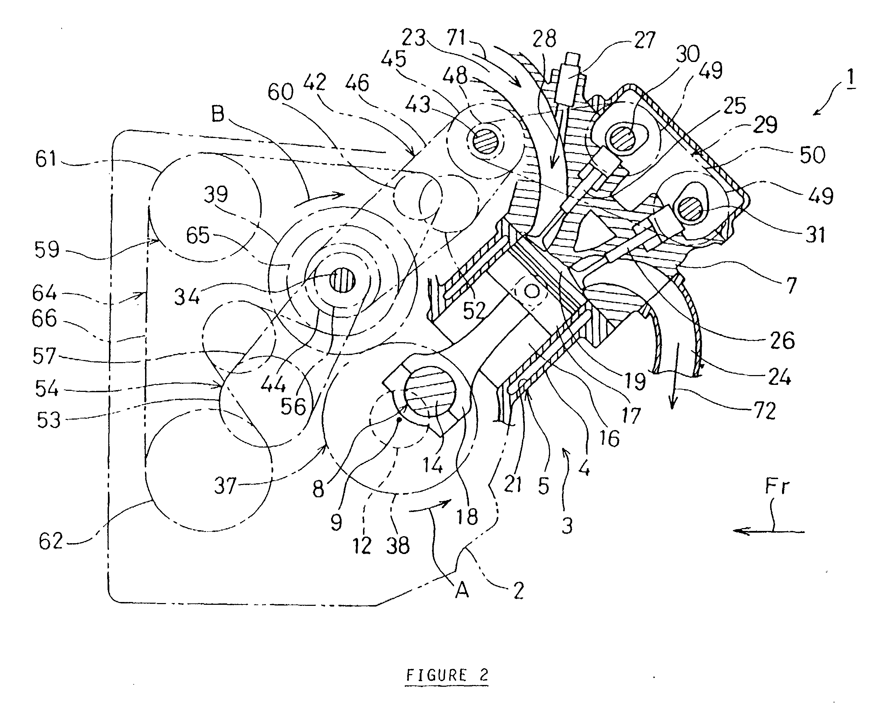

The first embodiment will be described below with reference to figures 1 to 4.

A crankshaft 8 is housed inside of the foregoing crankcase 2. The axis 9 of this crankshaft 8 extends left and right, and bearings 10 support it in the foregoing crankcase 2 to be freely rotatable around this axis 9. The foregoing crankshaft 8 is further connected to the drive wheels by means of a transmission apparatus 11. The foregoing crankshaft is cast and is composed of a main crankshaft 12 that is directly supported by the foregoing bearings 10 along the foregoing axis 9, further of crank arms 13 which project radially from this main crankshaft 12, and crank pins 14 that are supported on the projecting end sides of these crank arms 13.

Cylinder bores 16 have been formed in the foregoing cylinder unit 4, and pistons 17 have been inserted into these cylinder bores 16 to be freely slidable in their axial direction. Connecting rods 18 connect these pistons with the foregoing crank pins 14 of the crankshaft 8.

The combustion chambers 19 are formed in the space under the cylinder head 7 that is bounded by the foregoing cylinder units 4, the cylinder head 7 and the pistons 17. The discharge unit of a spark plug is set at the boundary of each of the foregoing combustion chambers.

A coolant passage 21 is formed in the foregoing cylinder unit 4 and cylinder head 7 for the circulation of coolant to cool the engine 1.

Air intake passages 23 are formed in the foregoing cylinder head 7 that pass from the outside of the cylinders 3 into the combustion chambers 19; exhaust passages 24 are formed which pass from the same combustion chambers 19 to the outside of the cylinders 3. Air intake valves 25 are supported by the cylinder head 7 to open and close the openings into the combustion chamber 19 of the foregoing air intake passages 23; springs hold these air-intake valves 25, which are normally closed, in the foregoing openings. Further, exhaust valves 26 are supported by the cylinder head 7 to open and close the openings into the combustion chamber 19 of the foregoing exhaust passages 24. Spring force holds these exhaust valves 26 normally closed. Fuel injection valves 27 are also attached to the foregoing cylinder head 7, and these fuel injection valves can inject fuel 28 through the air intake passages 23 toward the combustion chambers 19.

There is also a dynamic valve mechanism 29 that appropriately opens and closes the foregoing air intake valves 25 and exhaust valves 26. This dynamic valve mechanism 29 includes camshafts 30, 31 which are engine component parts that are in engagement with the foregoing air intake valves 25 and exhaust valves 26. The axes of these camshafts 30, 31 extend in the left-right direction and these camshafts 30,31 are supported in the foregoing cylinder head 7 to be rotatable around their axes.

An intermediate shaft 34 is installed parallel to the foregoing crankshaft and this intermediate shaft 34 is supported by bearings 36 to be rotatable around its axis 35.

A drive linkage means 37 causes the foregoing intermediate shaft 34 to follow the rotation of the foregoing crankshaft at the same RPM (arrows A, B). This drive linkage mechanism is composed of a drive gear wheel 38 which is formed integrally around the axis 9 of the foregoing crankshaft as a rotating drive member, and a follower gear wheel 39 which is attached as a rotary follower member around the axis 25 of the foregoing intermediate shaft by means of a spline engagement. The drive gear wheel 38 and the follower gear wheel 39 have the same diameter and the engagement of their teeth causes them to rotate in opposite directions. In the foregoing case, the drive gear wheel 38 can be either press-fitted onto one crank arm 13 or it can be integrally formed thereon.

The foregoing camshafts 30, 31 and the foregoing intermediate shaft 34 are linked together by another drive linkage means 42. This drive linkage means 42 has a linked drive shaft 43 that runs parallel to the foregoing intermediate shaft 34 and this linked drive shaft 43 is supported in the cylinder head 7 for the cylinders 3 to be freely rotatable around its axis. A drive sprocket 44, which is a rotating drive member, is attached around the axis 35 of the foregoing intermediate shaft 34, and a follower sprocket 45 is attached to the foregoing linked drive shaft 43. A chain 46 spans this drive sprocket 44 and the follower sprocket 45. A drive sprocket 48 is also attached to the foregoing linked drive shaft 43 and a follower sprocket 49 is attached to each of the above camshafts 30, 31. A chain 50, spans this drive sprocket 48 and the follower sprockets 49, 49.

There is a water pump 52, which is an engine component part that supplies coolant to the foregoing coolant passage 21. This water pump 52 is connected by the chain 46 of the foregoing drive linkage means 42. Further installed is an oil pump 52, which is an engine component part, and which supplies lubricating oil to the sliding surfaces of the engine 1, such as the bearings, cylinder bores 16, and pistons 17 that require lubrication. This oil pump 53 is linked to the foregoing intermediate shaft 34 by another drive linkage means 54.

The foregoing drive linkage means 54 consists of a drive sprocket 56 which is a rotating drive member that is spline-fitted around the axis 35 of the foregoing intermediate shaft 34, and of a follower sprocket on the foregoing oil pump 53; a chain 57 spans the follower sprocket and the drive sprocket 56.

The foregoing engine 1 is also equipped with auxiliary equipment 59 which consists of engine component parts. Included among this auxiliary equipment 59 are an alternator 60, power steering pump 61, air compressor 62, etc. This auxiliary equipment is linked to the foregoing intermediate shaft by another drive linkage means 64.

The foregoing drive linkage means 64 is composed of a drive pulley 65 which is a rotating drive member attached around the axis 35 of the foregoing intermediate shaft 34, of follower pulleys on the foregoing auxiliary equipment and a V-belt 66 which spans the drive pulley 65 and the follower pulleys.

As is shown in Figures 1 through 4, balance weights 68, 69 are installed on the foregoing intermediate shaft, midway in the axial direction and on the end; these balance weights 68, 69 are integrally formed on the foregoing intermediate shaft 34.

When the engine 1 is operating, when a piston 17 descends from its top dead point during the intake stroke, there is a linked movement, in succession, from the foregoing piston 17, connecting rod 18, crankshaft 8, drive linkage means 37, intermediate shaft 34, drive linkage mechanism 42, and camshafts 30, 31, which causes the air intake passage 23 to be opened by the cam on camshaft 30 engaging the air intake valve 25. At this time, the cam engagement between the exhaust valve 26 and the cam on the camshaft 31 leaves the exhaust passage 24 closed. This feature causes air 71 from the atmosphere to be drawn through the air intake passage 23 into the combustion chamber 19. Further, at this time, the fuel injection valve 27 injects fuel 28, and this fuel is mixed with, and drawn into, the foregoing combustion chamber 19 with the foregoing air 71.

Next, when the foregoing piston 17 rises, the air/fuel mixture in the foregoing combustion chamber 19 is compressed and ignited by a spark from the sparkplug, whereby it burns; the resulting combustion gases force the piston 17 downward. Then, as described above, the linkage with this piston 17 causes the cam engagement of the camshaft 31 with the exhaust valve 26 to open the exhaust passage 24. At this time, the cam engagement by the foregoing camshaft 30 on the air intake valve 25 keeps the air intake passage closed and the foregoing combustion gases are expelled outside of the cylinder 3 as exhaust 72 through the foregoing exhaust passage.

Thereupon there is a return to the above-described intake stroke and the foregoing actions are repeated for output of motive force by the crankshaft 8 into the transmission 11.

The drive linkage means 37 connects the foregoing crankshaft 8 to the intermediate shaft 34, and the drive linkage means 42 in turn connects to the water pump 52. This water pump 52 supplies coolant through the coolant passage 21, thus preventing seizing of the pistons 17 by water-cooling the engine 1.

Further, the oil pump 53 operates through a linkage of the foregoing crankshaft 8, the drive linkage means 37, the intermediate shaft 24 and the drive linkage means 54, and this oil pump 53 also prevents seizing of the piston 17 by providing lubricating oil to the areas of the engine 1 that require lubrication.

Further, the various auxiliary equipment 59 operates through a linkage of the foregoing crankshaft 8, the drive linkage means 37, the intermediate shaft 24 and the drive linkage means 64, allowing the various pieces of auxiliary equipment 59 to perform their respective functions.

There is a consecutive linkage from the above crankshaft 8, the drive linkage means 37 and the intermediate shaft 34 and the balance weights 68, 69 on this intermediate shaft 34 absorb the inertial forces of the engine.

To explain more specifically, the balance weights absorb the vibrations produced by the engine 1 by being of approximately the same magnitude as the inertial forces at the various crank angles, but in the opposite direction.

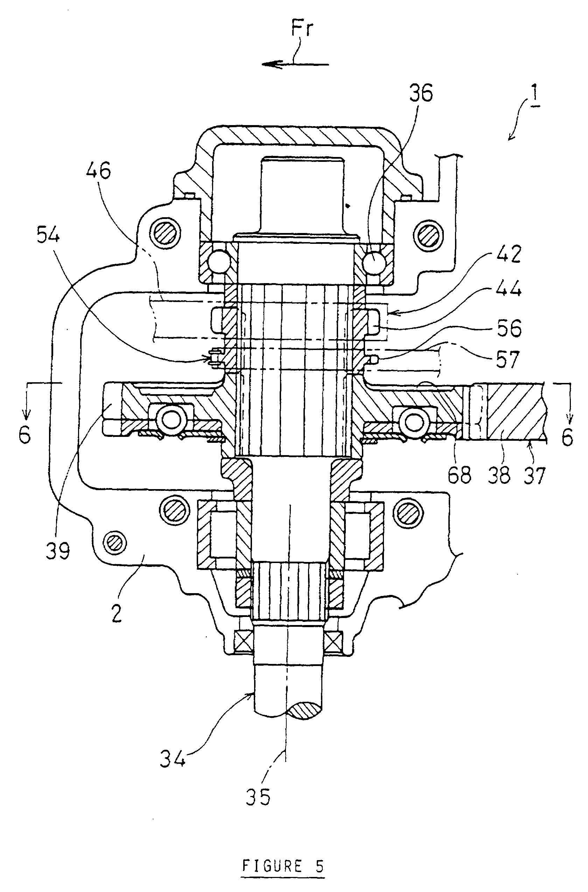

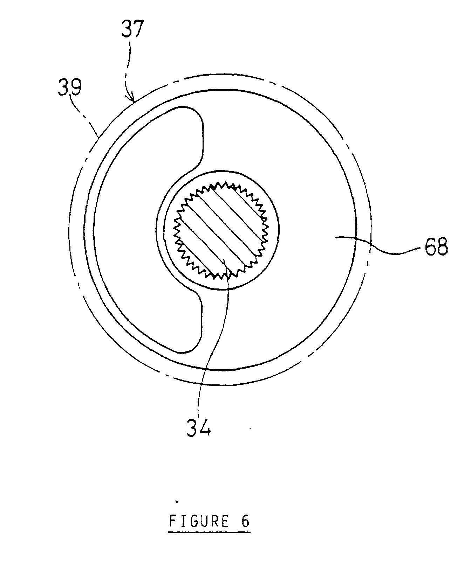

Figures 5 and 6 show a second embodiment.

In this embodiment, the balance weight 68 has been formed on the side face of the follower gear wheel 39 of the drive linkage means 37.

According to this configuration, the dimensions of the foregoing follower gear wheel in the radial direction are larger, so even if the balance weight 68 is of low weight, it is adequate to absorb the inertial forces of the engine.

Since the other mechanisms and action are common to those of the first embodiment described above, they have been labeled with the same reference numbers in the Figures and further explanation of them will be omitted.

As is apparent from the examples in the drawings, it would be possible to locate the balance weight 68 on the drive sprocket 44 of the drive linkage means 42, the drive sprocket of the drive linkage means 54, or on the drive pulley 65 of the drive linkage means 64.

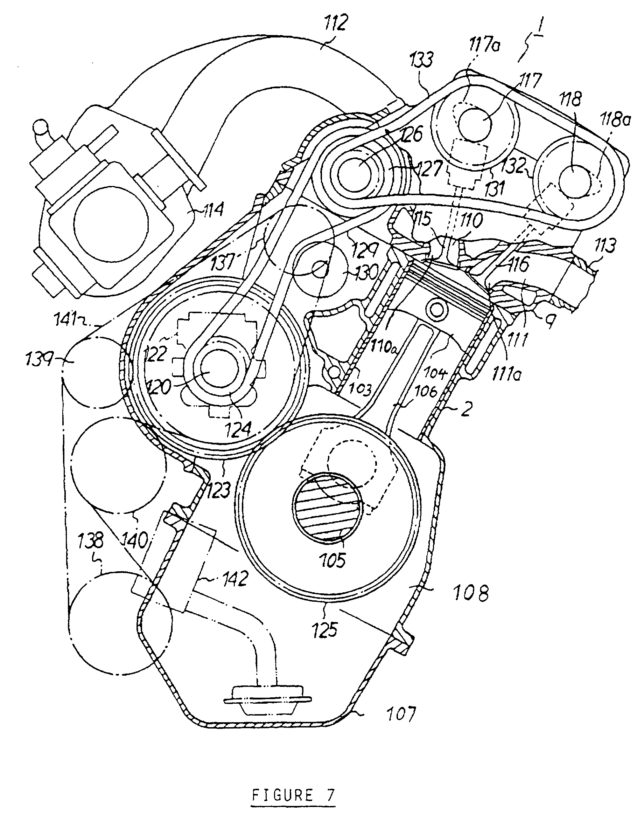

A third embodiment will be described with reference to Figures 7 to 11.

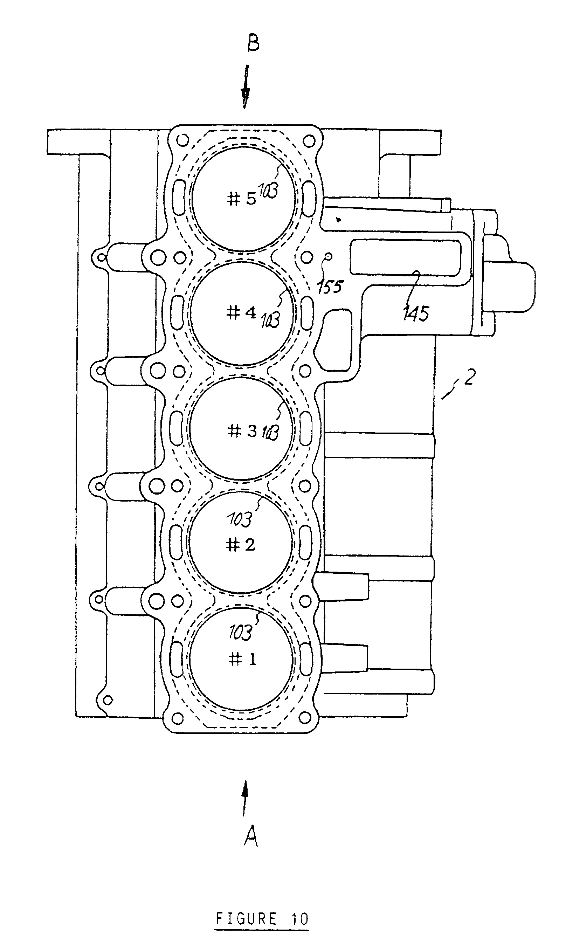

The internal combustion engine 1 shown in Figure 7 is a four-cycle, in-line, five cylinder engine for automobiles. As shown in Figure 10 its cylinder block 2 contains a row of five cylinders 103 numbered #1 through #5. Pistons 104 have been slidably inserted into each of the cylinders 103.The pistons 104 are attached by connecting rods 106 to a crankshaft 105 which extends lengthwise in a direction perpendicular to the surface of the paper in Figure 7. This crankshaft 105 is rotatably housed inside a crank chamber 108 that is formed by the cylinder block 2 and the oil pan 107 that is attached beneath it.

Air intake passages 110 and exhaust passages 111 are formed for each of the cylinders inside a cylinder head 109 that attaches to the top of the cylinder block 2. An air intake manifold 112 that connects to the air intake passages 110 and an exhaust manifold 113 that connects to the exhaust passages 111 are attached to the cylinder head 109 A surge tank 114 is further attached to the front end of the air intake manifold 112.

The foregoing air intake passages 110 and exhaust passages 117 evince openings, namely air intake ports 110a and exhaust ports 111a, into each cylinder 103. Air intake valves 115 and exhaust valves 116 are installed in these air intake ports 110a and exhaust ports 111a to open and close them at an appropriate timing, respectively. To wit, valve springs not shown in the figures maintain the air intake valves and exhaust valves in a normally-closed position. These valves are engaged by cams 117a, 118a that are integrally formed on the camshafts 117, 118 rotatably installed in the top of the cylinder head 109 and and extending in a direction that is perpendicular to the surface of the paper in Figure 1. The rotary drive of the camshafts 117, 118 causes these air intake ports 110a and exhaust ports 111a to be opened and closed, respectively, at an appropriate timing.

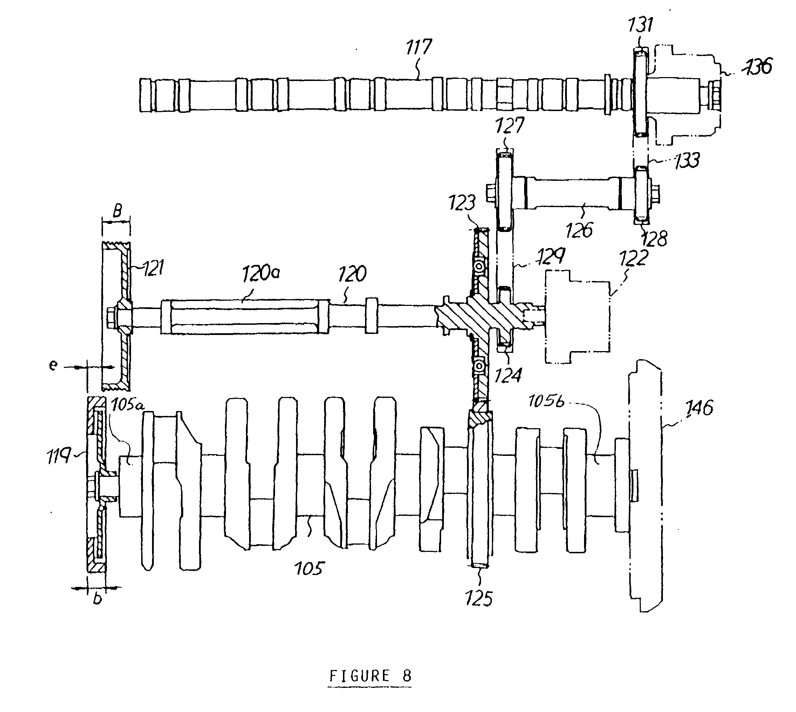

As is shown in Figure 8, a crank damper 119 is attached to one end of the foregoing crankshaft 105 and a flywheel 146 is attached to the other end. The crankshaft 105 is rotatably supported at either end by bearings (not shown) in journals 105a, 105b. Installed at an angle above the front end (the left in Figure 7) of the crankshaft 105 is a first intermediate shaft 120 that is parallel to the crankshaft 105; it is rotatably supported and is offset toward the air intake side with respect to the crankshaft 105. Attached to one end of this first intermediate shaft 120, on the side where the foregoing crank damper 119 is installed, is an auxiliary equipment drive pulley 121, while the power steering pump 122 is directly attached to the other end.

As is shown in Figure 8, the auxiliary equipment drive pulley 121 is located inside the crank damper 119 in the axial direction by the amount *e,* and its width *B* is greater than the width *b* of the crank damper 19 (*B* > *b*).

As is shown in Figure 8, a large diameter gear 123 and a small diameter sprocket 124 are installed on the same side of the first intermediate shaft 120 where the foregoing power steering pump 122 is attached; the large diameter gear 123 engages a gear 125 of the same diameter that is located in the middle of the crankshaft 105. The gear 123 and the gear 125 can be vehical gears.

The first intermediate shaft 120 is a balancer shaft, and a balance weight 120a is attached to it. It would also be possible to locate this balance weight in close proximity to the auxiliary equipment drive pulley 121, the gear 123, and the sprocket 124.

Furthermore, as is shown in Figure 8, because the first intermediate shaft 120 is shorter than the crankshaft 105 by an amount equal to the length of the below-described second intermediate shaft 126, it is possible to mount the power steering pump 122 directly upon it without exceeding the overall length of the engine 1.

On the other hand, there is a second intermediate shaft 126 that is rotatably installed on the air intake side of the cylinder head 109 and that is parallel to the crankshaft 105 and the first intermediate shaft 120. A sprocket 127 is attached to one end of said second intermediate shaft 126 and a sprocket 128 is attached to the other end. There is an endless chain 129 spanning the sprocket 127 and the foregoing sprocket 124 is engaged by the teeth of a sprocket 130 which is attached to the input shaft of the water pump, and which presses against it from the outside.

Sprockets 131,132 are attached to the respective ends of the foregoing camshafts 117,118, and an endless chain 133 spans these sprockets 131, 132 and the foregoing sprocket 128. As is shown in Figure 8, a VVT (hydraulic variable valve timing device)136 is attached to the end of the camshaft 117 on the air intake side.

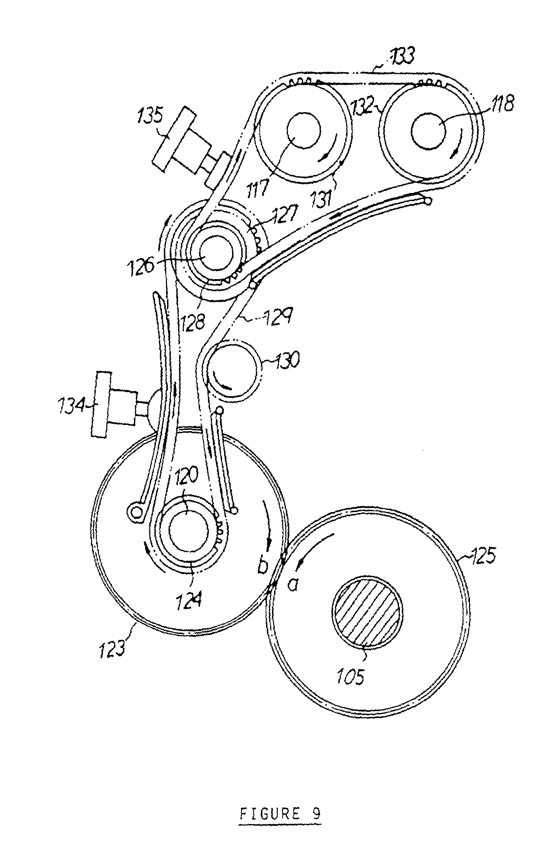

Then, as shown in Figure 7, the foregoing chains 129, 133, when viewed in the crankshaft's 105 axial direction, do not overlap the cylinder 103 (in other words, they do not cut across the cylinder 103) and are located to the outside (the air intake side of) the cylinder 103. Also, as is shown in Figure 9, the chains129,133 are contained within the axial length of the crankshaft 105. Furthermore, the chains 129,133 are positioned, with respect to the lengthwise direction of the engine, between cylinders (specifically between #4 and #5 cylinders 103 (see Figure 10)). In Figure 10, 145 represents a chain hole.

Further, as shown in Figure 7, auxiliary equipment comprising the alternator 137 and the compressor 138 for the air conditioner are mounted on the air intake side (the front side in Figure 7) of the present embodiment of the internal combustion engine 1. This equipment is spanned by an endless belt 141 which also winds around an idler pulley 139 and tension pulley 140. In the present embodiment, the alternator 137 is directly attached to the cylinder block 2, and the air conditioner compressor 138 is directly mounted on the oil pan.

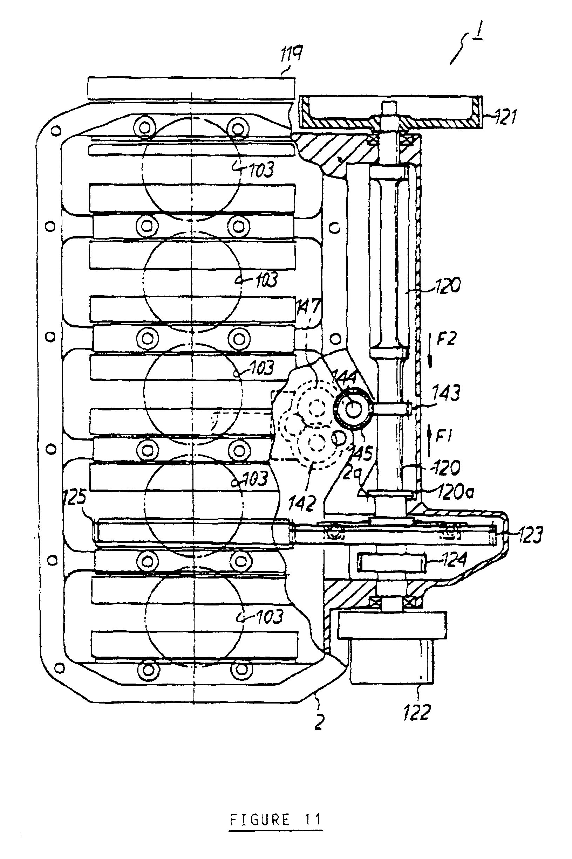

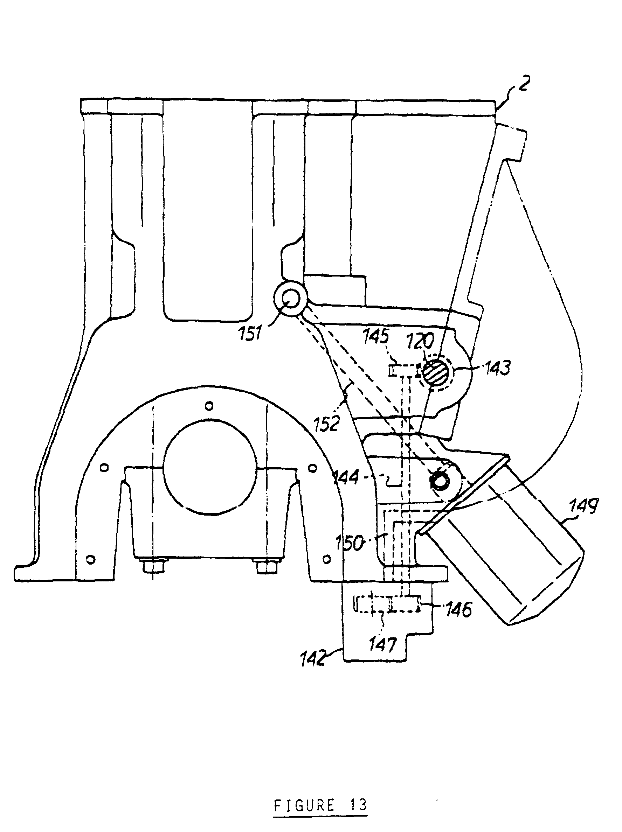

Then, as shown in Figures 11 and 13, the foregoing first intermediate shaft 120 is located on the air intake side, and geared oil pump 143 is attached to the bottom of the cylinder block, at its approximate center in the crankshaft direction. This oil pump 142 is driven by the first intermediate shaft 120; a helical gear 143 is attached to the first intermediate shaft 120, and said helical gear 143 engages the helical gear 145 that is attached to the top end of a drive shaft 144 that is disposed in the vertical direction. As is shown in Figure 1, the intake side of the oil pump 142 is connected to an intake tube 148 that opens inside the oil pan 107.

Further, as shown in Figure 13, the oil filter 149 is attached at an angle to the air intake side of the cylinder block 2 in close proximity to the foregoing oil pump 142. The outlet of the oil pump 142 is connected to the oil filter 149 and subsequently to oil holes 150 that are formed in the cylinder block 2.

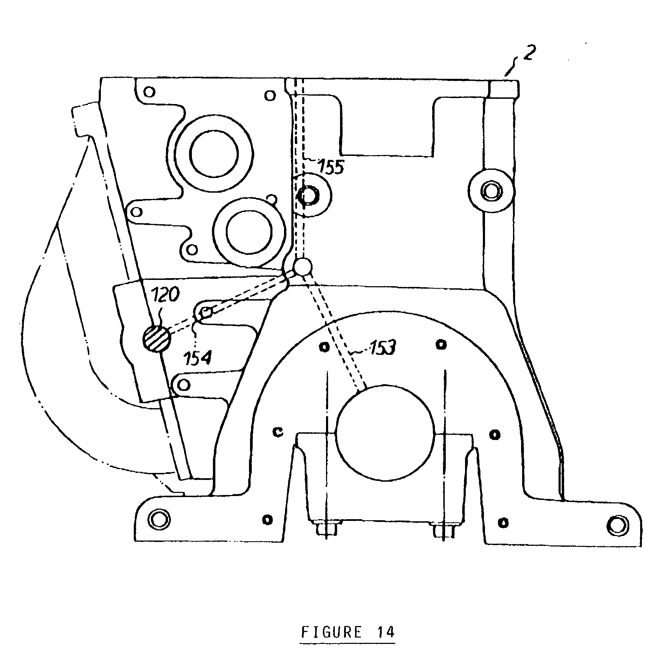

On the other hand, as is shown in Figures 13 and 14 the first intermediate shaft is installed about halfway up the cylinder block 2 on the air intake side, and the oil main gallery 151 is formed approximately horizontally in the crankshaft direction (perpendicular to the paper surface in Figures 13 and 14). As shown in Figure 13 the foregoing oil filter 149 is connected to the oil main gallery 151 by means of oil hole 152; as shown in Figure 14, there are a plurality of oil holes 153 that run through the cylinder block 2 from the main gallery 151 to the journal bearing areas for the crankshaft 105, and oil holes 155 that rise upward from the main gallery 151. As is shown in Figure 10, the oil holes 155 open at the top surface of the cylinder block 2 (the mating surface with the cylinder head 109). When the cylinder head 109 is attached to the top surface of the cylinder block 2 the oil holes 155 connect to an oil holes formed in the cylinder block 109 that are not shown in the figure.

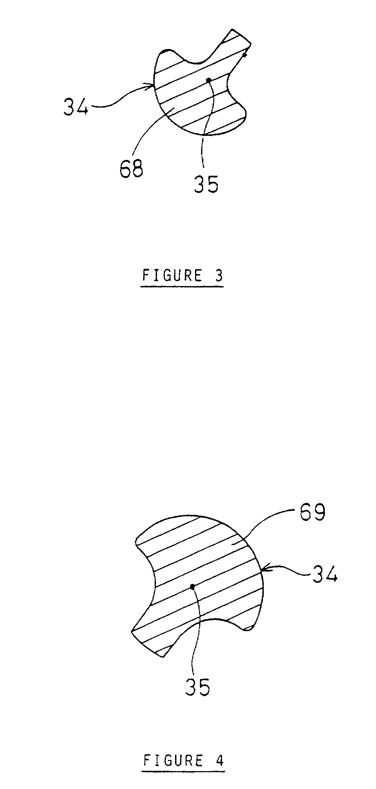

When said internal combustion engine 1 is operating and the crankshaft 105 is rotatably driven in the direction *a* shown by the arrow in Figure 3, the rotation of said crankshaft 105 is transmitted to the intermediate shaft 120 by the gears 125, 123, which are of the same diameter. This feature causes said first intermediate shaft 120 to rotate at the same speed as the crankshaft 105 in the direction shown by the arrow *b* in Figure 3. This rotation of the first intermediate shaft 120 transmits drive power through the auxiliary equipment pulley 121 and the belt 141 to the alternator 137 and the air conditioner compressor 138 to rotatably drive them. The power steering pump 122, which is also attached to said intermediate shaft 120, is rotatably driven at the same time.

Said internal combustion engine 1 is also equipped with an oil pump 142 as is shown in Figure 7. A drive transmission mechanism that is not shown transmits the rotation of the first intermediate shaft 120 to this oil pump 142, causing said oil pump 142 to be driven and to supply oil to various areas of the engine 1.

The rotation of the intermediate shaft 120 in the direction shown by the arrow *b* in Figure 3 is transmitted at reduced speed to the second intermediate shaft 126 by means of the sprocket 124, chain 129 and sprocket 127. The rotation of this second intermediate shaft 126 is in turn transmitted to the camshaft 117,118 at a further reduced speed by means of the sprocket 128, chain 133 and sprockets 131, 132. Thereby these camshafts 117, 118 are rotatably driven in the direction shown by the arrow, causing the air intake valves 115 and exhaust valves 116 to open and close the air intake ports 110a and exhaust ports 111a at an appropriate timing for the required gas exchanges. Further, the drive of chain 129 causes the rotation of the sprocket 130, causing the water pump (not shown) to be driven and to circulate coolant through the inside of the internal combustion engine 1.

Accordingly, in the current embodiment of the invention, the auxiliary equipment comprising the alternator 137 and compressor 138 for the air conditioner are located on the air intake side of the engine 1, allowing the reduction of the overall width of the engine, and protecting the alternator 137 and the air conditioner compressor 138 from heat damage by the exhaust heat.

Further, because the auxiliary equipment drive pulley 121 has been mounted on the first intermediate shaft 120, which is distinct from the crankshaft, it is possible to design the crank damper 119's width *b* to be less than that conventionally employed, and further, by locating the auxiliary equipment drive pulley 121 inside, by the amount e, of the crank damper 119 in the crankshaft direction, it is further possible to reduce the overall length of the engine 1, thereby achieving a smaller, more compact engine with reduced length and width. Such engines 1 are particularly advantageous for mounting in front wheel drive automobiles where mounting space is severely limited.

Further, since the alternator 137 and compressor 138 for the airconditioner etc., can be directly mounted on the cylinder block 2 or the oil pan 107, etc., in the present embodiment, the need for mounting brackets is obviated, and improvements are realized in NVH (noise, vibration and harshness).

While the crankshaft 105 of said internal combustion engine 1 rotates in the direction shown by the arrow *a* in Figure 9, the sprockets 124, 127, and 128 rotate in the direction shown by the arrow (the same direction indicated by arrow *b*) in Figure 3. There are chain tensioners 134, 125 located on the slack side of the chains 129, 133 that are driven by the sprockets 124,128, and that are located outside the air intake side of said engine 2 which apply the required tension to these chains 129, 133.

Because the foregoing chain tensioners 134, 135 are positioned in an open area on the outside of the engine 1, they are easier to install on the engine, and it is easier to adjust the tension applied by these chain tensioners 134, 135 and to perform maintenance on these chains 129, 133.

In the present embodiment, the rotation of the crankshaft 105 was transmitted to the first intermediate shaft 120 by means of gears 125, 123, but as shown in Figure 11, it would also be possible to transmit the rotation of the crankshaft 105 by means of sprockets 143, 144 and the chain 145 to the first intermediate shaft120. In that case, the chain tensioners 134, 135 would still be installed on the slack side of the chains 129,133 as described previously and it would be necessary, in order to place them on outside on the air intake side of the engine, to have the first intermediate shaft 120 as well as the sprockets 124,127,128 rotate in the same direction as the crankshaft 105 (in the direction opposite from that shown by *a* in Figure 9).

As described above, the oil pump 143 is driven by the first intermediate shaft 120 in said internal combustion engine. To wit, the rotation of the first intermediate shaft 120 is, as shown in Figure 13, transmitted by helical gears 143, 145 and the drive shaft 144 to the gears 146,147 on the oil pump 142 to drive said oil pump 142. In this case, the thrust forces F1, F2 that are generated by the engagement of the helical gears 143, 145 and gears 123,125 in the return directions are set to act in the opposite directions to offset each other. As a result, the thrust forces that act upon the first intermediate shaft 120 are held to a minimum, thereby preventing uneven wear and the generation of noise from the bearings that support said intermediate shaft 120. The flange area 120a that is formed on said intermediate shaft transmits the thrust forces acting on the first intermediate shaft 120 to the thrust bearings 2a (see Figure 11) on the cylinder block 2.

Then, when the first intermediate shaft 120 drives the oil pump as described above, oil from the oil pan 107 is drawn through the intake pipe 143 into the oil pump 142, and from there, is expelled under elevated pressure to the oil hole 150, and after being cleaned by passing through the oil filter 149, it passes through the oil hole 152 to the oil main gallery 151. Then, from the main gallery 151, the oil passes through oil holes 153, 154 and is supplied to the journal bearing areas for the crankshaft 105 and to the journal bearing areas of the first intermediate shaft 120, and at the same time, the oil is passed through the oil hole 155 and is supplied to the cylinder head 109 to supply lubrication to the foregoing camshafts 117, 118, etc., that are installed in the cylinder head 109. The lubricating oil that is supplied to these various areas is recovered in the oil pan 107 and from there the above-described process is continued to lubricate the various areas of the engine 1.

Since the oil pump 142, the oil filter 149 and the oil main gallery 151 are located with the first intermediate shaft 120 on the air intake side of the engine in the present embodiment, it is possible to shorten the length of the various oil holes 152-155 that connect to the oil main gallery 151, thereby reducing the flow loss in the flow through the oil holes 152-155 , and shortening the time required for the oil pressure to rise in the terminal areas of the oil passages when the engine is started, which in turn, eliminates the delay in the start-up operation of the VVT 36 (see Figure 8).

Further, since the present implementation embodiment made it possible to collect the auxiliary equipment composed of the alternator 137 and the air conditioner compressor 138 on the air intake side of the engine, not only was it possible to reduce the overall width of the engine, but the alternation 137 and the air conditioner compressor 138 are thereby protected from heat damage by the exhaust heat.

## Claims

1. Internal combustion engine with balancers, comprising:
a crankshaft (8;105) and an intermediate shaft (34;120) which are drivingly connected by drive linkage means (37),
additional drive linkage means (42,54,64) drivingly connecting said intermediate shaft (34;120) with other engine components comprising one or two camshafts (30,31), and
balance weights (68,69) that respond to the inertial forces of the engine and are provided on at least one of said intermediate shaft (34;120) or said drive linkage means (37,42,54,64),
**characterized in that**
the intermediate shaft (34;120) constitutes a first intermediate shaft (34; 120), this intermediate shaft and said one or two cam shafts (30,31) are linked by a second drive linkage means (42), said second drive linkage means forming part of the additional drive linkage means (42,54,64) and having a second intermediate shaft (43;126) that runs parallel to said first intermediate shaft (34;120), said first intermediate shaft (34;120) and said second intermediate shaft (43) each is provided with a sprocket (44,45), both sprockets being coupled by a first chain (46;129) of said additional drive linkage means (42,54,64), and that the second intermediate shaft (43) comprises another sprocket (48) which is coupled to sprockets (49) of said one or two cam shafts (30,31) via a second chain (50;130).

2. Internal combustion engine with balancers according to claim 1, **characterized in that** said drive linkage means (37,42,54,64), the additional drive linkage means (42,54,64), the intermediate shaft (34;120) and the balance weights (68,69) absorb in joint action the inertial forces of the engine.

3. Internal combustion engine with balancers according to claim 1 or 2, **characterized in that** at least one balance weight (68) is formed on a side face of a gear wheel (39), a sprocket (44) or a drive pulley (65;121) of said drive linkage means (37,44,54,64) on said intermediate shaft (34;120).

4. Internal combustion engine with balancers according to one of claims 1 to 3, **characterized in that** said engine components comprise at least one of either an engine cooling water pump (52) or a lubricating oil pump (53;142).

5. Internal combustion engine with balancers according to one of claims 1 to 4, **characterized in that** said engine components comprise auxiliary engine equipment

6. Internal combustion engine with balancers according to one of claims 1 to 5, **characterized in that** the intermediate shaft (34;120) and the crankshaft (8;105) are connected by the drive linkage means (37) in such a manner to rotate at the same speed.

7. Internal combustion engine with balancers according to one of claims 1 to 6, **characterized in that** said drive linkage means (37) connecting the intermediate shaft (34;120) and the crankshaft (8;105) is composed of a drive gearwheel (38) formed integrally around the axis (9) of the crankshaft (8;105), and a follower gear wheel (39) of the same diameter as said drive gear wheel (38), the follower gear wheel (39) being provided on said intermediate shaft (34;120).

8. Internal combustion engine with balancers according to one of claims 1 to 7, **characterized in that** a water pump (52) is driven by said first chain (46;129).

9. Internal combustion engine with balancers according to one of claims 1 to 8, **characterized in that** an oil pump (59) is linked to the intermediate shaft (34;120) by another drive linkage means (54).

10. internal combustion engine with balancers according to claim 9, **characterized in that** said drive linkage means (54) for said oil pump (53) comprises sprockets on said intermediate shaft (34;120) and said oil pump (53) which are coupled by a third chain (57).

11. Internal combustion engine with balancers according to one of claims 1 to 10, **characterized in that** engine auxiliary equipment (59) is driven through a belt from a drive pulley (65;121) on said intermediate shaft (34;120).

12. Internal combustion engine with balancers according to one of claims 1 to 11, **characterized in that** the second chain (50;133) connecting the second intermediate shaft (43;126) and the one or two cam shafts (117,118;30,31) when viewed from the axial direction of the crankshaft (105) is positioned outside the cylinder bank without overlapping a cylinder (103).

13. Internal combustion engine with balancers according to one of claims 1 to 12, **characterized in that** the first chain (46;129) connecting the first intermediate shaft (34;120) and the second intermediate shaft (43;126) when viewed from the axial direction of the crankshaft is positioned outside the cylinder bank without overlapping a cylinder (103).

14. Internal combustion engine with balancers according to claim 12 or 13, **characterized in that** chain tensioners (134,135) for applying the tension required to said first and/or second chain (129,133) are located on the outside of the engine.

15. Internal combustion engine with balancers according to one of claims 12 to 14, **characterized in that** said first and/or second chain (129,133) is located within the range of the axial length of the crankshaft (8;105).

16. Internal combustion engine with balancers according to one of claims 12 to 15, **characterized in that** said first and/or second chain (129,133) is located in a plane extending between two cylinders.

17. Internal combustion engine with balancers according to one of claims 9 to 16, **characterized in that** said oil pump (53;143), an oil filter (149), a main oil gallery (151) and the intermediate shaft (34;120) are arranged on the same side of the cylinders.

18. Internal combustion engine with balancers according to one of claims 1 to 17, **characterized in that** said drive linkage means between said crankshaft (105) and said first intermediate shaft (34;120) comprises a pair of helical gears (123,125) in engagement with each other.

19. Internal combustion engine with balancers according to claim 18, **characterized in that** the drive linkage means between said first intermediate shaft (34;120) and said oil pump (142) comprises a pair of helical gears (143,145) in engagement with each other.

20. Internal combustion engine with balancers according to claim 19, **characterized in that** one helical gear of said pairs of helical gears (123,125,143,145) each is provided on said first intermediate shaft (34;120), said pairs of helical gears being arranged with respect to each other so that thrust forces generated on the intermediate shaft (34;120) by each pair of helical gears act in opposite direction.

21. Internal combustion engine with balancers according to one of claims 1 to 20, **characterized in that** various pieces of auxiliary equipment driven by said intermediate shaft (34;120) are arranged on an air intake side of the engine.

22. Internal combustion engine with balancers according to one of claims 11 to 21, **characterized in that** the drive pulley (65;121) is arranged on one end of said first intermediate shaft (34;120) and that the auxiliary equipment driven via said drive pulley is arranged on one side of the engine.

23. Internal combustion engine with balancers according to one of claims 11 to 22, **characterized in that** said drive pulley (65;121) is arranged on the first intake shaft (120) on the same side as a crank damper (119) is arranged on the crankshaft (105), the drive pulley (65;121) being positioned further inward the engine with respect to the axis of rotation of the crankshaft (105) than said crank damper.

24. Internal combustion engine with balancers according to claim 22 or 23, **characterized in that** the other end of said first intermediate shaft (34;120) is directly connected to a power steering pump (122).

25. Internal combustion engine with balancers according to one of claims 11 to 24, **characterized in that** at least one portion of said auxiliary equipment is attached to an oil pan (107).

26. Internal combustion engine with balancers according to one of claims 1 to 25, **characterized in that** said first intermediate shaft (34;120) is offset toward the air intake side with respect to the crankshaft (8;105).

## Patentansprüche

1. Brennkraftmaschine mit Ausgleichselementen, mit:
einer Kurbelwelle (8; 105) und einer Zwischenwelle (34; 120), die antreibend durch Antriebsverbindungsmittel (37) verbunden sind,
zusätzlichen Antriebsverbindungsmitteln (42, 54, 64), die antreibend die Zwischenwelle (34; 120) mit anderen Motorbauteilen, die eine oder zwei Kurbelwellen (30,31) aufweisen, verbinden und
Ausgleichsgewichten (68,69), die auf die Trägheitskräfte des Motors ansprechen und die auf zumindest einer der Zwischenwelle (34; 120) oder den Antriebsverbindungsmitteln (37, 42, 54, 64) vorgesehen sind,
**dadurch gekennzeichnet, daß**
die Zwischenwelle (34; 120) eine erste Zwischenwelle (34; 120) bildet, diese Zwischenwelle, und die eine oder zwei Nockenwellen (30, 31) durch ein zweites Verbindungsmittel (42) verbunden sind, die das zweite Verbindungsmittel einen Teil der zusätzlichen Antriebsverbindungsmittel (42, 54, 64) bildet, und eine zweite Zwischenwelle (43, 126) hat, die parallel zu der ersten Zwischenwelle (34; 120) verläuft, die erste Zwischenwelle (34; 120) und die zweite Zwischenwelle (43) jede mit einem Kettenzahnrad (44, 45) versehen sind, beide Kettenzahnräder durch ein erste Kette (46; 129) der zusätzlichen Antriebsverbindungsmittel (42, 54, 64) gekoppelt sind, und daß die zweite Zwischenwelle (43) ein weiteres Kettenzahnrad (48) aufweist, das mit Kettenzahnrädern (49) der einen oder der zwei Nockenwellen (30, 31) über eine zweite Kette (50; 130) gekuppelt ist.

2. Brennkraftmaschine mit Ausgleichselementen nach Anspruch 1, **dadurch gekennzeichnet, daß** die Antriebsverbindungsmittel (37, 42, 54, 64), die zusätzlichen Antriebsverbindungsmittel (42, 54, 64), die Zwischenwelle (34; 120) und die Ausgleichsgewichte (68,69) in einer gemeinsamen Aktion die Trägheitskräfte des Motors absorbieren.

3. Brennkraftmaschine mit Ausgleichselementen nach Anspruch 1 oder 2, **dadurch gekennzeichnet, daß** zumindest ein Ausgleichsgewicht (68) auf einer Seitenfläche eines Zahnrades (39), eines Kettenzahnrades (44) oder einer Riemenscheibe (65; 121) der Antriebsverbindungsmittel (37, 42, 54, 64) auf der Zwischenwelle (34; 120) gebildet ist.

4. Brennkraftmaschine mit Ausgleichselementen nach einem der Ansprüche 1 bis 3, **dadurch gekennzeichnet, daß** die Motorbauteile zumindest eine von entweder einer Kühlwasserpumpe (52) oder einer Schmierölpumpe (53; 142) aufweisen.

5. Brennkraftmaschine mit Ausgleichselementen nach einem der Ansprüche 1 bis 4, **dadurch gekennzeichnet, daß** die Motorbauteile eine Motorhilfsausrüstung aufweisen.

6. Brennkraftmaschine mit Ausgleichselementen nach einem der Ansprüche 1 bis 5, **dadurch gekennzeichnet, daß** die Zwischenwelle (34; 120) und die Kurbelwelle (8; 105) durch die Antriebsverbindungsmittel (37) in solch einer Weise verbunden sind, um mit derselben Geschwindigkeit zu rotieren.

7. Brennkraftmaschine mit Ausgleichselementen nach einem der Ansprüche 1 bis 6, **dadurch gekennzeichnet, daß** die Antriebsverbindungsmittel (37), die die Zwischenwelle (34; 120) und die Kurbelwelle (8; 105) verbinden, aus einem um die Achse (9) der Kurbelwelle (8; 105) einstückig gebildeten Zahnrad (38) und einem Abtriebszahnrad (39) desselben Durchmessers, wie das Antriebszahnrad (38) gebildet wird, wobei das Abtriebszahnrad (39) auf der Zwischenwelle (34; 120) vorgesehen ist.

8. Brennkraftmaschine mit Ausgleichselementen nach einem der Ansprüche 1 bis 7, **dadurch gekennzeichnet, daß** eine Wasserpumpe (52) durch die erste Kette (46; 129) angetrieben ist.

9. Brennkraftmaschine mit Ausgleichselementen nach einem der Ansprüche 1 bis 8, **dadurch gekennzeichnet, daß** eine Ölpumpe (59) mit der Zwischenwelle (34; 120) durch ein weiteres Antriebsverbindungsmittel (54) verbunden ist.

10. Brennkraftmaschine mit Ausgleichselementen nach Anspruch 9, **dadurch gekennzeichnet, daß** die Antriebsverbindungsmittel (54) für die Ölpumpe (53) Kettenzahnräder auf der Zwischenwelle (34; 120) und der Ölpumpe (53) aufweisen, die durch eine dritte Kette (57) gekuppelt sind.

11. Brennkraftmaschine mit Ausgleichselementen nach einem der Ansprüche 1 bis 10, **dadurch gekennzeichnet, daß** die Motorhilfsausrüstung (59) durch einen Riemen von einer Riemenscheibe (65; 121) auf der Zwischenwelle (34; 120) angetrieben ist.

12. Brennkraftmaschine mit Ausgleichselementen nach einem der Ansprüche 1 bis 10, **dadurch gekennzeichnet, daß** die zweite Kette (50; 133), die die zweite Zwischenwelle (43; 126) und die eine oder die zwei Nockenwellen (117, 118; 30,31) verbindet, wenn aus der axialen Richtung der Kurbelwelle (105) gesehen, außerhalb des Zylinderblocks ohne Überlappen eines Zylinders (103) angeordnet ist.

13. Brennkraftmaschine mit Ausgleichselementen nach einem der Ansprüche 1 bis 12, **dadurch gekennzeichnet, daß** die erste Kette (46; 129), die die erste Zwischenwelle (34; 120) und die zweite Zwischenwelle (43; 126) verbindet, aus der axialen Richtung der Kurbelwelle gesehen, außerhalb des Zylinderblocks, ohne einen Zylinder (103) zu überlappen, angeordnet ist.

14. Brennkraftmaschine mit Ausgleichselementen nach Anspruch 12 oder 13, **dadurch gekennzeichnet, daß** die Kettenspanner (134, 135) zum Anlegen der Spannung, erforderlich für die erste und / oder die zweite Kette (129, 133), an der Außenseite des Motors angeordnet sind.

15. Brennkraftmaschine mit Ausgleichselementen nach einem der Ansprüche 12 bis 14, **dadurch gekennzeichnet, daß** die erste und / oder zweite Kette (129, 133) innerhalb des Bereiches der axialen Länge der Kurbelwelle (8; 105) angeordnet ist.

16. Brennkraftmaschine mit Ausgleichselementen nach einem der Ansprüche 12 bis 15, **dadurch gekennzeichnet, daß** die erste und / oder zweite Kette (129, 133) in einer Ebene, die sich zwischen zwei Zylindern erstreckt, angeordnet ist.

17. Brennkraftmaschine mit Ausgleichselementen nach einem der Ansprüche 9 bis 16, **dadurch gekennzeichnet, daß** die Ölpumpe (53; 143), ein Ölfilter (149), ein Hauptölumgang (151) und die Zwischenwelle (34; 120) auf derselben Seite der Zylinder angeordnet sind.

18. Brennkraftmaschine mit Ausgleichselementen nach einem der Ansprüche 1 bis 17, **dadurch gekennzeichnet, daß** das Antriebsverbindungsmittel zwischen der Kurbelwelle (105) und der ersten Zwischenwelle (34; 120) ein Paar von miteinander im Eingriff befindlichen Schrägzahnstirnrädern (123, 125) aufweist.

19. Brennkraftmaschine mit Ausgleichselementen nach Anspruch 18, **dadurch gekennzeichnet, daß** das Antriebsverbindungsmittel zwischen der ersten Zwischenwelle (34; 120) und der Ölpumpe (142) ein Paar von miteinander im Eingriff befindlichen Schrägzahnstirnrädern (143, 145) aufweist.

20. Brennkraftmaschine mit Ausgleichselementen nach Anspruch 19, **dadurch gekennzeichnet, daß** ein Schrägzahnstirnrad der Paare von Schrägzahnstirnrädern (123, 125, 143, 145) jeweils auf der ersten Zwischenwelle (34; 120) vorgesehen ist, wobei die Paare von Schrägzahnstirnräder in Bezug zueinander angeordnet sind, so daß die in der Zwischenwelle (34; 120) erzeugten Druckkräfte durch jedes Paar von Schrägzahnstirnräder in entgegengesetzter Richtung wirken.

21. Brennkraftmaschine mit Ausgleichselementen nach einem der Ansprüche 1 bis 20, **dadurch gekennzeichnet, daß** verschiedene Teile der Hilfsausrüstung, angetrieben durch die Zwischenwelle (34; 120), auf einer Lufteinlaßseite des Motors angeordnet sind.

22. Brennkraftmaschine mit Ausgleichselementen nach einem der Ansprüche 11 bis 21, **dadurch gekennzeichnet, daß** die Antriebsriemenscheibe (65; 121) an einem Ende der ersten Zwischenwelle (34; 120) angeordnet ist und daß die Hilfsausrüstung, angetrieben über die Antriebsriemenscheibe, an einer Seite des Motors angeordnet ist.

23. Brennkraftmaschine mit Ausgleichselementen nach einem der Ansprüche 11 bis 22, **dadurch gekennzeichnet, daß** die Antriebsriemenscheibe (65; 121) auf der ersten Einlaßwelle (120) angeordnet ist, auf derselben Seite, wie ein Kurbeldämpfer (119) an der Kurbelwelle (105) angeordnet ist, wobei die Antriebsriemenscheibe (65; 121) weiter innen des Motors in Bezug zu der Drehachse der Kurbelwelle (105), als der Kurbeldämpfer positioniert ist.

24. Brennkraftmaschine mit Ausgleichselementen nach dem Anspruch 22 oder 23, **dadurch gekennzeichnet, daß** das andere Ende der ersten Zwischenwelle (34; 120) direkt mit einer Lenkhilfepumpe (122) verbunden ist.

25. Brennkraftmaschine mit Ausgleichselementen nach einem der Ansprüche 11 bis 24, **dadurch gekennzeichnet, daß** zumindest ein Abschnitt der Hilfsausrüstung mit einer Ölwanne (107) verbunden ist.

26. Brennkraftmaschine mit Ausgleichselementen nach einem der Ansprüche 1 bis 25, **dadurch gekennzeichnet, daß** die erste Zwischenwelle (34; 120) in Richtung der Lufteinlaßseite in Bezug zu der Kurbelwelle (8; 105) versetzt ist.

## Revendications

1. Moteur à combustion interne à système d'équilibrage comprenant :
un vilebrequin (8 ; 105) et un arbre secondaire (34 ; 120) qui sont connectés en entraînement par des moyens de liaison d'entraînement (37),
des moyens de liaison d'entraînement complémentaires (42, 54, 64) connectant en entraînement ledit arbre secondaire (34 ; 120) avec d'autres composants du moteur y compris un ou deux arbres à cames (30, 31), et
des masses d'équilibrage (68, 69) qui répondent aux forces d'inertie du moteur et qui sont disposées sur au moins l'un dudit arbre secondaire (34 ; 120) ou desdits moyens de liaison d'entraînement (37, 42, 54, 64),
**caractérisé en ce que**,
l'arbre secondaire constitue un premier arbre secondaire (34 ; 120), cet arbre secondaire et un ou deux desdits arbres à cames (30, 31) sont reliés par des seconds moyens de liaison d'entraînement (42), lesdits seconds moyens de liaison d'entraînement faisant partie des moyens de liaison d'entraînement complémentaires (42, 54, 64) et comportant un second arbre secondaire (43 ; 126) qui fonctionne de manière parallèle au dit premier arbre secondaire (34 ; 120), ledit premier arbre secondaire (34 ; 120) et ledit second arbre secondaire (43) comportant chacun une roue dentée (44, 45), les deux roues dentées étant accouplées par une première chaîne (46 ; 129) desdits moyens de liaison d'entraînement complémentaires (42, 54, 64), et **en ce que** le second arbre secondaire (43) comprend une autre roue dentée (48) qui est accouplée à des roues dentées (49) desdits un ou deux arbres à cames (30, 31) par l'intermédiaire d'une seconde chaîne (50 ; 130).

2. Moteur à combustion interne à système d'équilibrage selon la revendication 1, **caractérisé en ce que** lesdits moyens de liaison d'entraînement (37, 42, 54, 64), les moyens de liaison d'entraînement complémentaires (42, 54, 64), l'arbre secondaire (34 ; 120) et les masses d'équilibrage (68, 69) absorbent en action conjointe les forces d'inertie du moteur.

3. Moteur à combustion interne à système d'équilibrage selon la revendication 1 ou la revendication 2, **caractérisé en ce que** au moins une masse d'équilibrage (68) est formée sur une face latérale d'une roue d'engrenage (39), d'une roue dentée (44) ou d'une poulie d'entraînement (65 ; 121) desdits moyens de liaison d'entraînement (37, 44, 54, 64) sur ledit arbre secondaire (34 ; 120).

4. Moteur à combustion interne à système d'équilibrage selon l'une des revendications 1 à 3, **caractérisé en ce que** lesdits composants du moteur comprennent au moins soit une pompe à eau de refroidissement du moteur (52), soit une pompe à huile de lubrification (53 ; 142).

5. Moteur à combustion interne à système d'équilibrage selon l'une des revendications 1 à 4, **caractérisé en ce que** lesdits composants du moteur comprennent un équipement auxiliaire de moteur.

6. Moteur à combustion interne à système d'équilibrage selon l'une des revendications 1 à 5, **caractérisé en ce que** l'arbre secondaire (34 ; 120) et le vilebrequin (8 ; 105) sont en connexion par les moyens de liaison d'entraînement (37) de manière à pouvoir tourner à la même vitesse.

7. Moteur à combustion interne à système d'équilibrage selon l'une des revendications 1 à 6, **caractérisé en ce que** lesdits moyens de liaison d'entraînement (37) connectant l'arbre secondaire (34 ; 120) et le vilebrequin (8 ; 105) se composent d'une roue d'engrenage d'entraînement (38) formée de manière intégrée autour de l'axe (9) du vilebrequin (8 ; 105), et d'une roue d'engrenage menée (39) du même diamètre que ladite roue d'engrenage d'entraînement (38), la roue d'engrenage menée (39) étant montée sur ledit arbre secondaire (34 ; 120).

8. Moteur à combustion interne à système d'équilibrage selon l'une des revendications 1 à 7, **caractérisé en ce qu'**une pompe à eau (52) est entraînée par ladite première chaîne (46 ; 129).

9. Moteur à combustion interne à système d'équilibrage selon l'une des revendications 1 à 8, **caractérisé en ce qu'**une pompe à huile (59) est reliée à l'arbre secondaire (34 ; 120) par d'autres moyens de liaison d'entraînement (54).

10. Moteur à combustion interne à système d'équilibrage selon la revendication 9, **caractérisé en ce que** lesdits moyens de liaison d'entraînement (54) destinés à ladite pompe à huile (53) comprennent des roues dentées disposées sur ledit arbre secondaire (34 ; 120) et sur ladite pompe à huile qui sont accouplées par une troisième chaîne (57).

11. Moteur à combustion interne à système d'équilibrage selon l'une des revendications 1 à 10, **caractérisé en ce que** l'équipement auxiliaire de moteur (59) est entraîné par l'intermédiaire d'une courroie à partir d'une poulie d'entraînement (65 ; 121) disposée sur ledit arbre secondaire (34 ; 120).

12. Moteur à combustion interne à système d'équilibrage selon l'une des revendications 1 à 11, **caractérisé en ce que** la seconde chaîne (50 ; 133) qui relie le second arbre secondaire (43 ; 126) à l'un ou aux deux arbres à cames (117, 118 ; 30, 31), lorsqu'elle est vue dans le sens axial du vilebrequin (105), est positionnée à l'extérieur du bloc cylindres sans recouvrir un cylindre (103).

13. Moteur à combustion interne à système d'équilibrage selon l'une des revendications 1 à 12, **caractérisé en ce que** ladite première chaîne (46 ; 129) reliant le premier arbre secondaire (34 ; 120) et le second arbre secondaire (43 ; 126), lorsqu'elle est vue dans le sens axial du vilebrequin, est positionnée à l'extérieur du bloc cylindres sans recouvrir un cylindre (103).

14. Moteur à combustion interne à système d'équilibrage selon la revendication 12 ou la revendication 13, **caractérisé en ce que** des tendeurs de chaîne (134, 135) destinés à appliquer la tension requise sur la première et / ou la seconde chaîne (129, 133) sont placés à l'extérieur du moteur.

15. Moteur à combustion interne à système d'équilibrage selon l'une des revendications 12 à 14, **caractérisé en ce que** lesdites première et / ou seconde chaînes (129, 133) sont placées dans la plage de la longueur axiale du vilebrequin (8 ; 105).

16. Moteur à combustion interne à système d'équilibrage selon l'une des revendications 12 à 15, **caractérisé en ce que** lesdites première et / ou seconde chaîne (129, 133) sont placées dans un plan qui s'étend entre deux cylindres.

17. Moteur à combustion interne à système d'équilibrage selon l'une des revendications 9 à 16, **caractérisé en ce que** ladite pompe à huile (53 ; 143), un filtre à huile (149), un conduit d'huile principal (151) et l'arbre secondaire (34 ; 120) sont aménagés sur le même côté des cylindres.

18. Moteur à combustion interne à système d'équilibrage selon l'une des revendications 1 à 17, **caractérisé en ce que** lesdits moyens de liaison d'entraînement disposés entre ledit vilebrequin (105) et ledit premier arbre secondaire (34 ; 120) comprennent une paire de pignons hélicoïdaux (123, 125) qui s'engagent l'un avec l'autre.

19. Moteur à combustion interne à système d'équilibrage selon la revendication 18, **caractérisé en ce que** les moyens de liaison d'entraînement disposés entre ledit premier arbre secondaire (34 ; 120) et ladite pompe à huile (142) comprennent une paire de pignons hélicoïdaux (143, 145) qui s'engagent l'un avec l'autre.

20. Moteur à combustion interne à système d'équilibrage selon la revendication 19, **caractérisé en ce qu'**un pignon hélicoïdal de chacune desdites paires de pignons hélicoïdaux (123, 125, 143, 145) est disposé sur ledit premier arbre secondaire (34 ; 120), lesdites paires de pignons hélicoïdaux étant aménagés les unes par rapport aux autres de telle sorte que les forces de poussée générées sur l'arbre secondaire (34 ; 120) par chaque paire de pignons hélicoïdaux agissent dans une direction opposée.

21. Moteur à combustion interne à système d'équilibrage selon l'une des revendications 1 à 20, **caractérisé en ce que** différentes pièces de l'équipement auxiliaire entraînées par ledit arbre secondaire (34 ; 120) sont disposées du côté de l'admission d'air du moteur.

22. Moteur à combustion interne à système d'équilibrage selon l'une des revendications 11 à 21, **caractérisé en ce que** la poulie d'entraînement (65 ; 121) est disposée sur une extrémité dudit premier arbre secondaire (34 ; 120) et **en ce que** l'équipement auxiliaire entraîné par l'intermédiaire de ladite poulie d'entraînement est disposé sur un côté du moteur.

23. Moteur à combustion interne à système d'équilibrage selon l'une des revendications 11 à 22, **caractérisé en ce que** la poulie d'entraînement (65 ; 121) est disposée sur le premier arbre d'admission (120) sur le même côté qu'un amortisseur de manivelle (119) qui est disposé sur le vilebrequin (105), la poulie d'entraînement (65 ; 121) étant positionnée davantage vers l'intérieur du moteur par rapport à l'axe de rotation du vilebrequin (105) que ledit amortisseur de manivelle.

24. Moteur à combustion interne à système d'équilibrage selon la revendication 22 ou la revendication 23, **caractérisé en ce que** l'autre extrémité dudit premier arbre secondaire (34 ; 120) est connecté directement à une pompe de direction assistée (122).

25. Moteur à combustion interne à système d'équilibrage selon l'une des revendications 11 à 24, **caractérisé en ce que** au moins une partie dudit équipement auxiliaire est fixée sur un carter d'huile (107).

26. Moteur à combustion interne à système d'équilibrage selon l'une des revendications 1 à 25, **caractérisé en ce que** ledit premier arbre secondaire (34 ; 120) est décalé vers le côté de l'admission d'air par rapport au vilebrequin (8 ; 105).
